(19) Europäisches Patentamt / European Patent Office / Office européen des brevets

(11) **EP 1 629 885 B1**

(12) **EUROPÄISCHE PATENTSCHRIFT**

(45) Veröffentlichungstag und Bekanntmachung des Hinweises auf die Patenterteilung:
**08.10.2008 Patentblatt 2008/41**

(21) Anmeldenummer: **04748968.7**

(22) Anmeldetag: **14.07.2004**

(51) Int Cl.:
**B01J 19/10** (2006.01)

(86) Internationale Anmeldenummer:
**PCT/RU2004/000275**

(87) Internationale Veröffentlichungsnummer:
**WO 2005/018801 (03.03.2005 Gazette 2005/09)**

(54) **KAVITATIONSREAKTOR ZUR BEHANDLUNG VON FLÜSSIGKEITSSTROM**

CAVITATION REACTOR FOR TREATING LIQUID FLOW

REACTEUR PAR CAVITATION DESTINE AU TRAITEMENT D'UN FLUX DE LIQUIDE

(84) Benannte Vertragsstaaten:
**AT BE BG CH CY CZ DE DK EE ES FI FR GB GR HU IE IT LI LU MC NL PL PT RO SE SI SK TR**

(30) Priorität: **25.08.2003 RU 2003125802**

(43) Veröffentlichungstag der Anmeldung:
**01.03.2006 Patentblatt 2006/09**

(73) Patentinhaber: **Obschestvo S Ogranichennoi Otvetstvennostyu "ASTOR-S" Vologda 160019 (RU)**

(72) Erfinder: **SHESTAKOV, Sergei Dmitrievich Vologda, 160031 (RU)**

(74) Vertreter: **Jeck, Anton Jeck - Fleck - Herrmann Klingengasse 2 71665 Vaihingen/Enz (DE)**

(56) Entgegenhaltungen:
EP-A1- 0 098 674  GB-A- 1 097 112
RU-C1- 2 209 112  SU-A1- 598 846
US-A- 3 614 069  US-A- 6 035 897
US-B1- 6 505 648

**EP 1 629 885 B1**

**Beschreibung**

Die Erfindung bezieht sich auf den Bereich der Geräte für die Ultraschall-Kavitationsdesintegration von flüssigen Medien: Zerstörungen, Absonderungen, Zerteilung beliebiger Substationen, einschließlich mikroskopischer, lebendiger Formen, die in Form von abgewogenen Phasen in diesen Medien existieren, sowie die Dissoziation von Molekülen der Medien selbst. Das Ergebnis der Kavitationsbearbeitung von flüssigen Medien ist die Erhöhung des Dispersitätsgrads und der Homogenität der Medien, die Intensivierung der darin ablaufenden, chemischen Reaktionen, die Synthese von neuen Verbindungen, die Entgiftung und auch die Erhöhung der chemischen Aktivität der Medien, zum Beispiel der Hydrierungsaktivität, und der Dissoziationsfähigkeit des Wassers. Der Kavitationsbearbeitung können die Medien in Form von Suspensionen, Emulsionen, Kolloidlösungen oder von echten Lösungen sowie von Wasser und anderen Flüssigkeiten untergezogen werden.

Die Erfindung kann in der Nahrungs-, Chemie-, Erz-, Pharma-, Medizin- und Parfümindustrie zum Einsatz kommen.

Es ist ein Reaktor für die Ultraschallbearbeitung eines Flüssigkeitsstroms bei stetiger Homogenisierung oder Emulgierung bekannt. Der Reaktor besitzt einen vorgegebenen Innenumfang, dessen Form unter Berücksichtigung der Unterbringung einer Mischvorrichtung darin und der Gewährleistung bester Bedingungen für die Vermischung ausgeführt ist [1].

Der bekannte Reaktor enthält keine Resonanzzellen. Die Mischvorrichtung ermöglicht nicht, im Reaktor eine stehende, akustische Welle und eine im Raum des Reaktors unbewegliche Verteilung der Dichte der potentiellen Kavitationsenergie sicherzustellen. Das Kavitationsfeld in diesem Reaktor ist eine Überlagerung der Felder von Wanderwellen unter der Bedingung der Veränderung der Richtungen ihrer Verbreitung. Dabei wird durch die Vermischung der Flüssigkeit eine ausreichende Intensität und eine Gleichmäßigkeit der Wirkung dieses Kavitationsfelds gewährleistet.

Zu den Nachteilen des bekannten Reaktors zählt, dass im Reaktor die Wahrscheinlichkeit der Zerstörung von Aufbauelementen, darunter die Mischvorrichtung, unter der Einwirkung der Kavitationserosion nicht ausgeschlossen ist. Die in das zu bearbeitende Medium gelangenden Erosionsprodukte können die physikalischchemischen Eigenschaften des Mediums irreversibel ändern.

Ferner ist ein Reaktor bekannt [2], der ein Gehäuse enthält, das eine Kammer bildet, in der sich die zu bearbeitende Flüssigkeit, eine Ultraschallwellenquelle, die in der Kammer die Kavitation anregt, und eine reflektierende Wand befinden; zwischen dieser Wand und dem Gehäuse liegt eine Schicht, die einen Teil der Ultraschallwelle absorbiert, der in die zu bearbeitende Flüssigkeit nicht reflektiert wurde.

Auf diese Weise bilden die Ultraschallwellenquelle und die reflektierende Wand zusammen eine Resonanzzelle [3], in der beim Betrieb des Reaktors in der zu bearbeitenden Flüssigkeit eine stehende, akustische Welle sichergestellt wird.

Da die Gehäuseabmessungen beliebig gewählt werden, sind die Gehäusewände vor der Einwirkung der Kavitation nicht geschützt, denn in der stehenden Ultraschallwelle bilden sich stationäre Kavitationsbereiche [3], die die Gehäusewände kontaktieren. Die Kavitation in der Nähe der Gehäuseoberfläche ruft eine Erosion der Materialien hervor, aus denen das Gehäuse hergestellt ist; die Kavitation wird vom Gelangen ihrer Produkte in das zu bearbeitende Medium begleitet.

Ein der vorliegenden Erfindung am nächsten stehendes Analogon ist ein Reaktor für die Kavitationsbearbeitung eines Flüssigkeitsstroms, in dem eine stehende, akustische Welle [4] sichergestellt wird. Der Gehäusedurchmesser des Reaktors wird so gewählt, dass die Dichte der abgegebenen, potentiellen Kavitationsenergie an den Gehäusewänden minimal ist. Dadurch ist die Erosion des Materials, aus dem das Gehäuse hergestellt ist, auf einem Minimalwert gehalten.

Im bekannten Reaktor wird die Gleichmäßigkeit der Bearbeitung des Flüssigkeitsstroms nicht gewährleistet, da die Vermischung der Flüssigkeit oder die Festlegung der vorgegebenen Verteilung der Dichte der abgegebenen, potentiellen Kavitationsenergie im Flüssigkeitsstrom unmöglich ist.

Wie bekannt ist, verläuft die Mehrheit der auf der Kavitationserosion basierenden Prozesse innerhalb einer kurzen Zeit: einige Einheiten oder Dutzende der Perioden der elastischen, die Kavitation hervorrufenden Ultraschallwelle des diese erzeugenden Oszillators [5]. Deshalb gewährleistet sogar der kurze Aufenthalt des Stroms der zu bearbeitenden Flüssigkeit innerhalb des Umfangs, in dem die Prozessparameter für das Erreichen des gewünschten Ergebnisses vorgegeben sind, das Erreichen des gewünschten Ergebnisses.

Somit kann als einfachste Lösung des Problems der Sicherstellung einer gleichmäßigen und intensiven Bearbeitung des Flüssigkeitsstroms der Durchlass dieses Stroms durch die Zone mit hoher Dichte der abgegebenen, potentiellen Energie durch Beschränkung der Stromquerschnittsfläche sein. Als Element für diese Beschränkung kann eine flache Abblendvorrichtung dienen, die auf der Ebene, die parallel zu den Schwingungsverschiebungen der Wände der Resonanzzelle liegt, untergebracht ist, um die stehende, akustische Welle in der Zelle nicht abzuschirmen. Da die Abblendvorrichtung flach ist, wird die Fläche ihres Kontakts mit dem Gebiet hoher Dichte der abgegebenen, potentiellen Energie minimal.

Es kann gezeigt werden, dass im Allgemeinen das Vorhandensein von einigen stationären Kavitationsgebieten in der Resonanzzelle des Reaktors die Werte der Dichte der potentiellen Kavitationsenergie in jedem beliebigen Punkt des Koordinatensystems x, y, z des Innenumfangs des Kavitationsreaktors in Abwesenheit der Abblendvorrichtung durch die dimensionslose Funktion $f_{x,y,z}$ gefunden werden kann, die folgendermaßen lautet [3]:

$$f_{x,y,z} = \left(1 - \left\{\frac{a_{x,y,z}}{\lambda} + \frac{1}{2n}\left[\frac{n}{2}\right]\right\}\right)\left\{\frac{a_{x,y,z}}{\lambda} + \frac{1}{2n}\left[\frac{n}{2}\right]\right\}\left(\frac{a_{x,y,z}}{\lambda} + \frac{1}{2n}\left[\frac{n}{2}\right]\right)^{-2} b_{x,y,z}^2 \quad ,(1)$$

wobei

$\lambda$      die Länge der akustischen Welle in der zu bearbeitenden Flüssigkeit ist,

n      die Anzahl der stationären Kavitationsgebiete ist, die in der Resonanzzelle beim Reaktorbetrieb entstehen,

$a_{x,y,z}$      die mittlere Entfernung zwischen einem beliebigen Punkt des Innenumfangs des Reaktors und allen daraus ersichtlichen Punkten aller stationären Kavitationsgebiete ist, die beim Reaktorbetrieb in Abwesenheit der Abblendvorrichtung entstehen,

$b_{x,y,z}$      der Mittelwert der Größe ist, die den Entfernungen zwischen einem beliebigen Punkt des Reaktorinnenumfangs und allen daraus ersichtlichen Punkten aller stationären Kavitationsgebiete reziprok ist, die beim Reaktorbetriebs in Abwesenheit der Abblendvorrichtung entstehen.

In quadratischen Klammern ist der ganze Teil der Zahl dargestellt, während in den Figurklammern der gebrochene Teil der Zahl dargestellt ist.

Dann wird die relative Dichte der abgegebenen, potentiellen Kavitationsenergie in einem beliebigen Punkt des Umfangs V des Kavitationsreaktors folgendermaßen lauten:

$$w_{x,y,z} = V \frac{f_{x,y,z}}{\iiint\limits_{(V)} f_{x,y,z}\, \mathrm{d}x\, \mathrm{d}y\, \mathrm{d}z} \qquad (2)$$

Als Maß, das die Funktion der Verteilung w charakterisiert, kann die Mittelwertabweichung $S_w$ der Werte dieser Funktion von ihrem Mittelwert verwendet werden. Es ist klar, dass, je geringer diese Abweichung ist, die Verteilung um so gleichmäßiger ist.

Unter Verwendung dieser Gleichungen des mathematischen Modells des Kavitationsreaktors und der dimensionslosen Einheiten kann folgendes gezeigt werden:

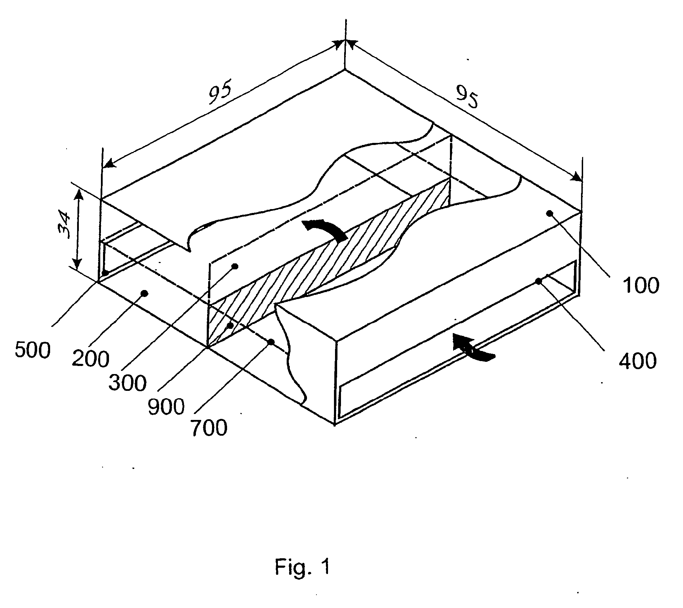

Es wird ein im Grundriss quadratischer Kavitationsreaktor, der in Fig. 1 (Prototyp) gezeigt ist, mit einer Halbwellenresonanzzelle von l x b = 115x115mm, und eine Bearbeitung von Wasser sowie eine charakteristische Abmessung der Zelle bei der Frequenz des Zwangsschwingungsoszillators vorausgesetzt, die beispielsweise 22000 Hz, 34mm (0,5 $\lambda$) beträgt. Der maximale Wert w an der Wand der Zelle wird gleich 1,18 relative Einheiten sein, während der Wert $s_w$ im Schnitt der Symmetrieebene 0,675 relative Einheiten beträgt. Unten wird im Vergleich zum Reaktor gemäß der Erfindung gezeigt, dass diese Mittelquadratabweichung zu groß ist.

Das technische Ergebnis ist die Erhöhung der Gleichmäßigkeit der Einwirkung der potentiellen Kavitationsenergie auf den Strom der zu bearbeitenden Flüssigkeit unter Gewährleistung der zulässigen Erosionseinwirkung auf die Elemente des Reaktoraufbaus.

Das erwähnte, technische Ergebnis wird dadurch erreicht, dass innerhalb des Reaktors in der Ebene, die parallel zu den Schwingungsverschiebungen der Wände der Resonanzzelle liegt, eine flache Abblendvorrichtung mit einer Öffnung zur Beschränkung der Querschnittsfläche des Flüssigkeitsstroms untergebracht ist, die aus einem erosionsbeständigen Material hergestellt ist, wobei die Erosionsbeständigkeit nicht niedriger als die Erosionsbeständigkeit des Materials der Wände der Resonanzzelle ist. Die Form und die Abmessungen einer Öffnung darin sind derart gewählt, dass die Dichte der potentiellen Kavitationsenergie auf der Öffnungsfläche den maximalen Wert der Dichte an den Wänden der Resonanzzelle überschreitet.

Die Realisierung der Merkmale der Erfindung ist am Beispiel der Berechnung der Koordinaten der Öffnung in der Abblendvorrichtung für den in Draufsicht quadratischen, eine Seitenlänge von 115mm aufweisenden Kavitationsreaktors der Planwelle mit der Halbwellenresonanzzelle dargestellt. Die Abblendvorrichtung sei in der Symmetrieebene des Reaktorinnenumfangs angeordnet, die parallel zu den Schwingungsverschiebungen der Wände der Resonanzzelle liegt. Die Wellenlänge sei λ = 68mm (die Frequenz des Oszillators beträgt 22000 Hz; die Flüssigkeit ist Wasser), womit die Parameter wie bei dem oben betrachteten Prototyp gewählt sind. Dann ergibt sich die gesuchte Lösung beispielsweise für die maximale Fläche der Öffnung als Wurzel der transzendenten Gleichung Y bei nach Belieben vorgegebenen Werten.

$$f_{X,Y,0} = \max_{y=0,25\lambda} f_{x,\,y,\,z} = 1,18$$

Die Mittelquadratabweichung der relativen Dichte der abgegebenen, potentiellen Kavitationsenergie vom durchschnittlichen Strom in der Ebene der Abblendvorrichtung beträgt 0,510 relative Einheiten, das heißt, dass die Gleichmäßigkeit der Verteilung w hier besser als bei dem Prototyp $(s_w = 0,675)$ unter den gleichen Bedingungen ist.

Die Erfindung wird nun anhand von Ausführungsbeispielen mit Bezug auf die Zeichnungen näher erläutert. Es zeigen:

Fig. 1    eine schematische, perspektivische Ansicht eines quadratischen Kavitationsreaktors,

Fig. 2    eine der Fig. 1 ähnliche Ansicht mit einem Öffnungsprofil in der Abblendvorrichtung im ersten Quadrant des Koordinatensystems mit einem Anfang im geometrischen Zentrum des Reaktorinnenumfangs, wobei der Netzschritt 1 mm beträgt,

Fig. 3    einen Schnitt durch einen Dreihalbwellen-Kavitationsreaktor, der mit dem Schnitt gemäß der Längssymmetrieebene vereinigt ist,

Fig.4     eine Draufsicht, die mit einem Schnitt vereint ist, auf den Kavitationsreaktor der Fig. 4, wobei der Maßstab bedingt (relativ) ist,

Fig. 5    ein zweidimensionales Diagramm der Verteilungsfunktion der relativen Dichte der potentiellen Energie in der Ebene der Abblendvorrichtung des Kavitationsreaktors, der in den Figuren 3, 4 dargestellt ist,

Fig. 6    ein zweidimensionales Diagramm der Verteilungsfunktion der relativen Dichte der potentiellen Energie in der Ebene der Abblendvorrichtung des Kavitationsreaktors mit gegenüber dem Diagramm in Fig. 5 veränderten Abmessungen in der Breite, und

Fig. 7    ein zweidimensionales Diagramm der Verteilungsfunktion der relativen Dichte der potentiellen Energie in der Ebene der Abblendvorrichtung eines Kavitationsreaktors mit gegenüber dem Diagramm in Fig. 5 veränderten Abmessungen in der Breite und in der Höhe.

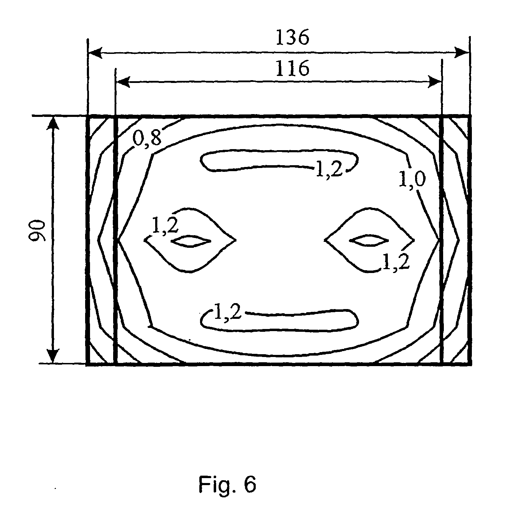

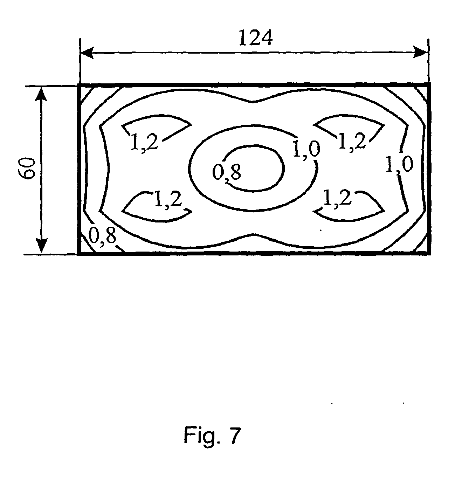

Der Kavitationsreaktor in Fig. 1 ist entsprechend den Merkmalen des Prototyps konstruiert. Mit den Bezugsziffern 100 und 200 sind die Wände der Resonanzzelle des Reaktors bezeichnet. Die Bezugsziffer 300 stellt eine Schnittfläche dar, für die die oben genannte Berechnungen der Figuren 6 und 7 angeführt ist. Mit 400 und 500 sind Öffnungen für den Eingang und Ausgang des Stroms der zu bearbeitenden Flüssigkeit bezeichnet. In einer Ebene 700 bildet sich beim Reaktorbetrieb ein stationärer Kavitationsbereich. Mit den Pfeilen ist die Richtung des Flüssigkeitsstroms innerhalb des Reaktors gezeigt.

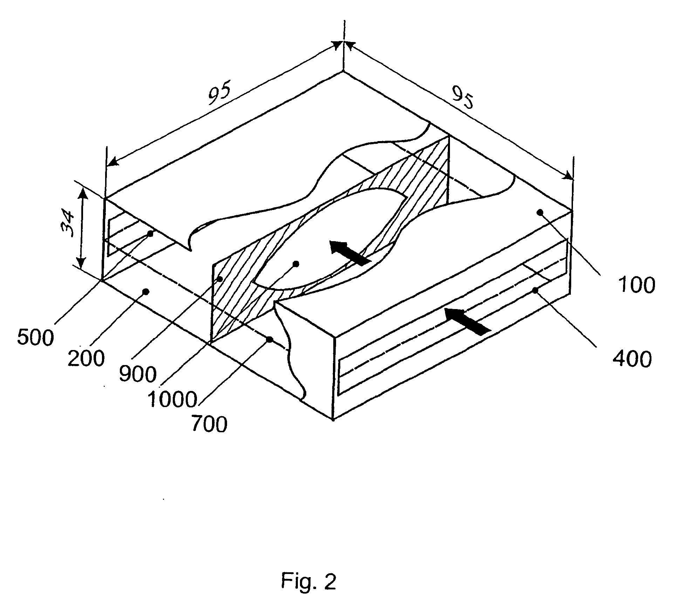

In Fig. 2 ist die Abblendevorrichtung mit 900 bezeichnet. Sie enthält die Öffnung 1000, die die Querschnittsfläche des Flüssigkeitsstroms in der Symmetrieebene des Reaktors einschränkt. Die Bezugsziffern sind denen der Fig. 1 ähnlich.

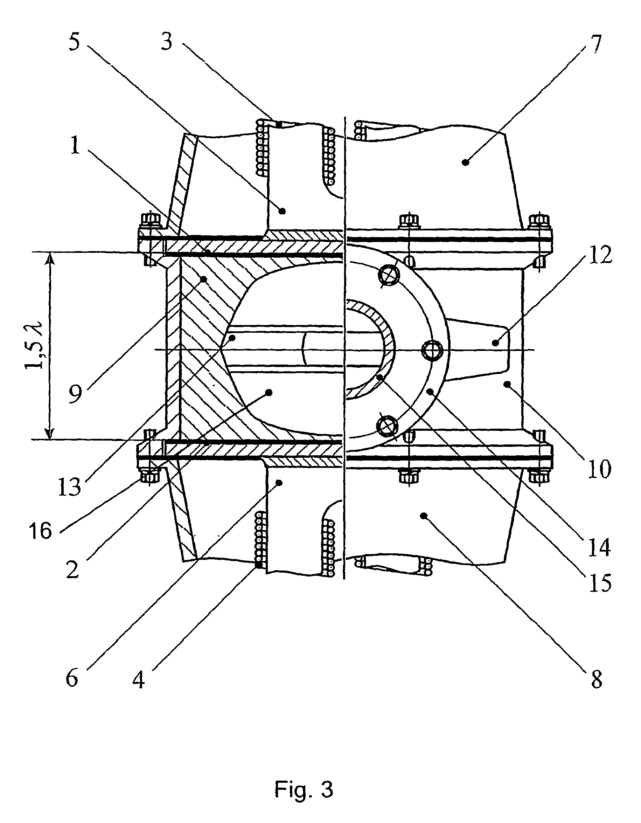

In Fig. 3 ist eine Hauptansicht eines Dreihalbwellen-Kavitationsreaktor mit einer in Draufsicht quadratischen Resonanzzelle der Größe 164x164mm gezeigt. Die Öffnung in der Abblendvorrichtung 9 des Reaktors ist entsprechend den Merkmalen der Erfindung berechnet. Der Maßstab ist bedingt (relativ).

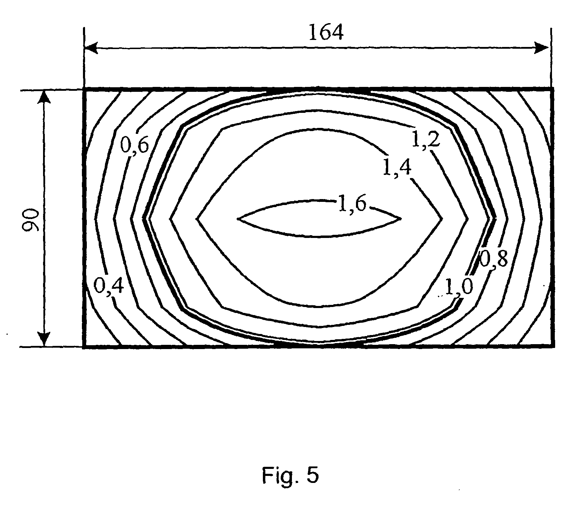

In Fig. 5 verbinden die feinen Äquilinien Punkte mit den gleichen Werten der Funktion, die im Schnitt dieser Linien gezeigt sind. Mit den dicken Linien sind die Konturen der Abblendvorrichtung gezeigt.

Den Figuren 6 und 7 ist entnehmbar, dass die Abblendvorrichtung 900 für unterschiedliche Abmessungen der Resonanzzelle unterschiedliche Querschnittsformen der Öffnung 100 sowie eine unterschiedliche Anzahl von Öffnung 1000 aufweisen kann.

Die Erfindung wird auf folgende Weise umgesetzt.

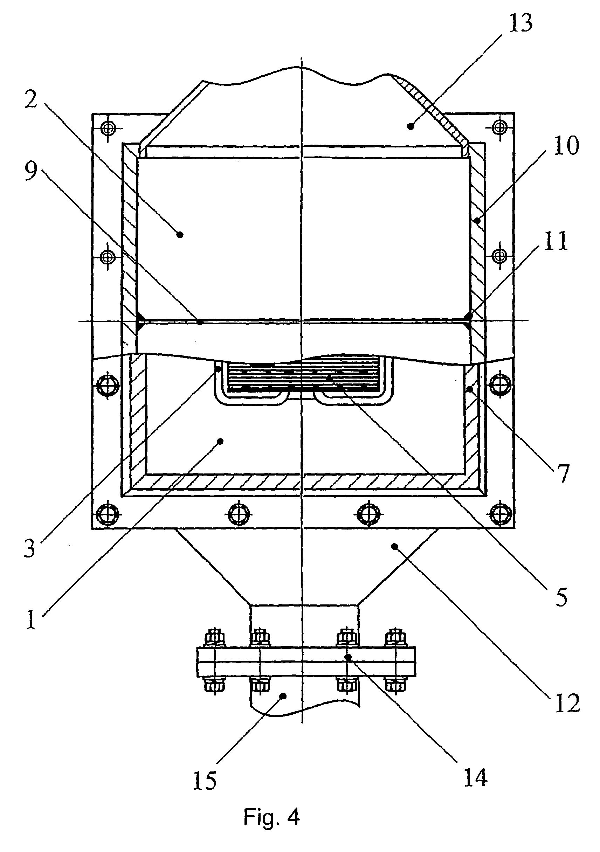

Der Flüssigkeitsstrom, beispielsweise eine konzentrierte Lösung aus Natriumchlorid, das zum Salzen des Fleischrohstoffs bei der Produktion von Würsten verwendet wird, wird zwecks seiner Aktivierung und der Entgiftung durch den Dreihalbwellen-Kavitationsreaktor laufen gelassen, der in den Figuren 4 und 5 dargestellt ist. Die zu bearbeitende Lösung verfügt über eine hohe Korrosionsaktivität, die zusammen mit der Kavitationserosion eine wesentliche zerstörende Wirkung auf die Materialien der Reaktorbauteile ausüben kann.

Für die Bearbeitung innerhalb des Kavitationsreaktors mit Hilfe von Strahlern von Ultraschallschwingungen wird in der Lösung eine stehende, akustische Welle mit einem vorgegebenen, mittleren Wert der Volumendichte der Leistung P erzeugt, die sowohl zur Aktivierung als auch zur Entgiftung der Lösung aus [3] erforderlich und notwendig ist, die gleich 0,8-1,1 Vt/cm$^3$ ist. Diese Dichte der Leistung kann nach der Amplitude A der Schwingungsverschiebung der Oberflächen jedes von zwei Strahlern 1 oder 2 ermittelt werden, die die Wände der Resonanzzelle darstellen, beispielsweise durch Feststellung der entsprechenden Amplitude der variablen Komponente des Wicklungsstroms 3 und 4 von elektroakustischen, magnetostriktiven Umwandlern 5 und 6, die beispielsweise nach [6] ausgebildet und in den Gehäusen 7 und 8 untergebracht sind, da P und A durch eine strenge Abhängigkeit miteinander verbunden sind.

Gemäß dem Wesen der Erfindung muss die Dichte der potentiellen Energie ermittelt werden, die beispielsweise für einen beliebigen Zeitraum in einem beliebigen Punkt der Ebene der Öffnung in der Abblendvorrichtung so abgegeben wird, dass ihre Werte nicht geringer als ihr maximaler Wert an den Wänden der Resonanzzelle ist, der innerhalb derselben Periode abgegeben wurde.

Die Fläche, in der für die Vergrößerung der Gleichmäßigkeit der Bearbeitung der Flüssigkeit der Querschnitt des Stroms beschränkt ist, ist die Fläche der querlaufenden (bezüglich der Bewegung des Stroms) Symmetrie der Resonanzzelle (Figuren 4 und 5). Die Fläche liegt parallel zu den Schwingungsverschiebungen der Wände der Zelle. Der Strom ist auf den Umfang der Öffnung in der Abblendvorrichtung 9 beschränkt. In diesem Fall können die übrigen Parameter des Reaktors außer der charakteristischen Größe der Zelle, die gleich 1,5 λ ist, beliebig aufgrund der Leistung der Strahler und der geforderten Produktivität des Prozesses gewählt werden.

Wenn auch der Innenumfang des Gehäuses 10 des Reaktors die Form eines Quadrats mit den Seiten 164x164mm aufweist, dann ist bei der Länge der Welle in der Lösung NaCl für die Frequenz, beispielsweise 28000Hz, die gleich 60mm ist, die summarische, akustische Leistung der Strahler (0,8+1,1) gleich: 2 Watt/cm3 x 16,4cm x 16,4cm x 9cm = 2300 Watt.

Es kann ausgerechnet werden, dass die Amplitude der Schwingungsverschiebung der Wände des Reaktors dabei etwa 1,5mkm ist.

Die Koordinaten der Öffnung in der Abblendvorrichtung werden nach (3)-(5) für den ersten Quadranten des Koordinatensystems mit dem Anfang im Zentrum der Symmetrie der zu betrachtenden Ebene berechnet.

Die Lösung ergibt sich als Wurzel Y der transzendenten Gleichung $f_{x,y,z}$ = 0,92 bei beliebig vorgegebenen Werten von X.

Das Öffnungsprofil in der Abblendvorrichtung (die dicken Linien) und das zweidimensionale Diagramm der Funktion der Verteilung der relativen Dichte der potentiellen Energie in der Ebene der Abblendvorrichtung sind in Fig. 6 gezeigt.

Die Abblendvorrichtung 9 mit der Öffnung wird aus demselben Material hergestellt wie die Wand der Resonanzzelle (die Platte der Strahler), beispielsweise aus legiertem Stahl der Marke 3OHGCA, der eine hohe Erosionsbeständigkeit besitzt, und wird an den Reaktorgehäusewänden beispielsweise mittels einer Punktschweißverbindung befestigt.

Der Reaktor arbeitet in folgender Weise.

Der Strom der Natriumchloridlösung bildet sich im Diffusionsapparat 12, dessen Abmessungen an der Grenze der Resonanzzelle in Richtung der Schwingungen des Zwangsschwingungsoszillators als ein Viertel der Wellenlänge [3] festgelegt sind, um die Verbreitung seiner Schwingungen außerhalb der Zelle zu vermeiden und dadurch die Abgabe der ganzen akustischen Leistung innerhalb des Innenumfangs des Reaktors zu gewährleisten. Bei der Stromzuleitung zu den Wicklungen 3, 4 der Umwandler 5, 6 beginnen die Wände der Zelle 1 und 2 gegen die Phase zu schwanken. Weil sie im Raum um die Entfernung teilbar durch die Hälfte der Länge der Schwingungswelle in der Lösung verteilt sind, wird in der Resonanzzelle eine akustische, stehende Welle sichergestellt, unter deren Einwirkung sich in der Lösung drei stationäre Kavitationsgebiete bilden.

Die abgegebene, potentielle Kavitationsenergie erfüllt die Arbeit im Strom der Lösung, die sich in der Zerstörung der Assoziaten der Moleküle des aufgelösten Salzes t, in ihrer Degidration und Dissoziation mit Bildung von ionischen Paaren, in der Teilung der Molekül-Cluster des Wassers, die durch die Wasserstoffverbindungen gebildet sind, in der Synthese von Wasserstoffperoxid und in der mechanischen Zerstörung der Zellenhülle der mikrobiellen Körper ausdrückt, die die Mikroflora der Lösung bilden.

Der Lösungsstrom fließt durch die Öffnung in der Abblendvorrichtung, das heißt durch den Bereich des Reaktorumfangs, in dem die maximal gleichmäßige (mit der relativen Mittelwertabweichung 0,156 relative Einheiten) Verteilung der relativen Dichte der potentiellen Kavitationsenergie sichergestellt wird. Es kann ausgerechnet werden, dass in der Abwesenheit der Abblendvorrichtung, wie beim Prototyp, der Wert $S_w$ = 0,429 rel. Einheiten beträgt, also mehr als um das Zweifache.

Die Lösung fließt aus dem Reaktor über den Kollektor 13 ab, der dem Diffusionsapparat 12 gegenüber symmetrisch zur Abblendvorrichtung 9 angeordnet ist. Mit Hilfe der Flansche 14, mit denen der Diffusionsapparat und der Kollektor versehen sind, kann der Reaktor in die Leitung zum Vorschub der Lösung 15 durch die Pumpe eingebaut werden.

Auf diese Weise bestätigen die oben genannten Angaben die Möglichkeit der Realisierung der vorliegenden Erfindung und des Erreichens des oben genannten technischen Ergebnisses bei der Verkörperung der Gesamtheit der Merkmale der Erfindung.

**Liste des in der Beschreibung genannten Stands der Technik**

1. US 4302112, 24.11.1981
2. US 4618263, 21.10.1986
3. WectaKOB C.A., Die Grundlagen der Technologie der Kavitationsdesintegration, - M: EBA-Press, 2001, 173 S.: Illustr.
4. RU 2209112, 04.06.2002 *
5. Bergmann L., Der Ultraschall und seine Anwendung in der Wissenschaft und Technik, -M: IIL, 1956, 726 Seiten: Illustr.
6. RU 2181633, 14.07.1998

**Patentansprüche**

1. Kavitationsreaktor für die Bearbeitung eines Flüssigkeitsstroms, der eine Resonanzzelle aufweist, innerhalb der während des Reaktorbetriebs eine stehende, akustische Welle erzeugt wird,

   **dadurch gekennzeichnet,**

   **dass** innerhalb des Reaktors in der Ebene (300), die parallel zu den Schwingungsverschiebungen der Wände (1, 2, 100, 200) der Resonanzzelle verläuft, eine flache Abblendvorrichtung (9, 900) mit mindestens einer Öffnung (1000) zwecks Beschränkung der Querschnittsfläche des Flüssigkeitsstroms untergebracht ist, die aus einem erosionsbeständigen Material hergestellt ist, dessen Erosionsbeständigkeit nicht niedriger als die Erosionsbeständigkeit des Materials der Wände (1, 2, 100, 200) der Resonanzzelle ist, wobei die Form und die Abmessungen der Öffnung (1000) darin so ausgewählt sind, dass die Dichte der potentiellen Kavitationsenergie in der Öffnungsfläche (1000) den maximalen Dichtewert an den Wänden (1, 2, 100, 200) der Resonanzzelle überschreitet.

**Claims**

1. Cavitation reactor for treating a liquid flow, which includes a resonance wave, within which a standing, acoustic wave is generated during the operation of the reactor, **characterised in that** within the reactor in the plane (300) that extends parallel to the vibratory displacements of the walls (1, 2, 100, 200) of the resonance cell, a flat screening device (9, 900) with at least one opening (1000), is accommodated for the purposes of restricting the cross-sectional area of the liquid flow, the said screening device being produced from an erosion-resistant material, the erosion resistance of which not being less than the erosion resistance of the material of the walls (1, 2, 100, 200) of the resonance cell, wherein the form and the dimensions of the opening (1000) therein are selected such that density of the potential cavitation energy in the opening surface (1000) exceeds the maximum density value at the walls (1, 2, 100, 200) of the resonance cell.

**Revendications**

1. Réacteur par cavitation pour le traitement d'un courant de liquide, qui a une cellule de résonance à l'intérieur de laquelle une onde acoustique stationnaire est produite pendant le fonctionnement du réacteur,
   **caractérisé**
   **en ce que**, à l'intérieur du réacteur, dans le plan ( 300 ) qui s'étend parallèlement au déplacement en oscillation des parois ( 1, 2, 100, 200 ) de la cellule de résonance, est logé un dispositif ( 9, 900 ) plat formant diaphragme, ayant au moins une ouverture ( 1000 ) en vue de limiter la surface de la section transversale du courant de liquide, le dispositif étant en un matériau résistant à l'érosion, dont la résistance à l'érosion n'est pas plus petite que la résistance à l'érosion du matériau de paroi ( 1, 2, 100, 200 ) de la cellule de résonance, la forme et les dimensions de l'ouverture ( 1000 ) étant choisies de façon à ce que la densité de l'énergie de cavitation potentielle dans la surface ( 1000 ) d'ouverture dépasse la valeur de densité maximum sur les parois ( 1, 2, 100, 200 ) de la cellule de résonance.

Fig. 1

Fig. 2

Fig. 3

Fig. 4

Fig. 5

Fig. 6

Fig. 7

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 4302112 A
- US 4618263 A
- RU 2209112
- RU 2181633

**In der Beschreibung aufgeführte Nicht-Patentliteratur**

- Die Grundlagen der Technologie der Kavitationsdesintegration. **WECTAKOB C.A.** Illustr. M: EBA-Press, 2001, 173
- Der Ultraschall und seine Anwendung in der Wissenschaft und Technik. **BERGMANN L.** Illustr. M: IIL, 1956, 726